# FASCICULE DE BREVET EUROPEEN

(11) **EP 2 408 786 B1**
(45) Date de publication et mention de la délivrance du brevet: **23.07.2014**
(21) Numéro de dépôt: 10712457.0
(22) Date de dépôt: 16.03.2010
(51) Int. Cl.: C07F 7/18, G01N 33/543

(54) **NOUVEAUX COMPOSES SILANES PORTEURS D'UNE CHAINE CARBONEE CYCLIQUE COMPRENANT UNE FONCTION ALCYNE POUR FONCTIONNALISER DES SUPPORTS SOLIDES ET IMMOBILISER SUR CES SUPPORTS DES MOLECULES BIOLOGIQUES**
NEUE SILANVERBINDUNGEN MIT CYCLISCHER KOHLENSTOFFKETTE EINSCHLIESSLICH EINER ALKINFUNKTION ZUR FUNKTIONALISIERUNG FESTER SUBSTRATE UND IMMOBILISIERUNG BIOLOGISCHER MOLEKÜLE AUF DIESEN SUBSTRATEN
NOVEL SILANE COMPOUNDS HAVING A CYCLIC CARBON CHAIN INCLUDING AN ALKYNE FUNCTION FOR FUNCTIONALISING SOLID SUBSTRATES AND IMMOBILISING BIOLOGICAL MOLECULES ON SAID SUBSTRATES

(30) Priorité: 18.03.2009 FR 0901254
(43) Date de publication de la demande: 25.01.2012
(73) Titulaire: Commissariat à l'Énergie Atomique et aux Énergies Alternatives, 75015 Paris (FR)
(72) Inventeur: BERNARDIN, Aude, F-45740 Lailly-en-Val (FR); DELAPIERRE, Guillaume, F-38450 Vif (FR); HOANG, Antoine, F-Grenoble 38000 (FR); TEXIER-NOGUES, Isabelle, F-38000 Grenoble (FR)
(74) Mandataire: Noel, Chantal Odile
(86) Numéro de dépôt international: PCT/FR2010/000218
(87) Numéro de publication internationale: WO 2010/106243

(56) Documents cités:
- EP-A2- 0 664 452

## Description

L'invention concerne un composé silane comprenant une fonctionnalité cycloalcyne.

Elle concerne également un procédé de fonctionnalisation d'un support solide, et le support solide ainsi obtenu.

Elle concerne encore un procédé d'immobilisation d'une molécule biologique, un procédé de scellement de deux supports solides ainsi que la structure constituée des deux supports solides scellés.

L'analyse de la structure, de l'organisation et de la séquence ainsi que l'étude du rôle d'une molécule biologique d'intérêt est d'une importance majeure dans la prévision, le diagnostic et le traitement de maladies.

Des supports porteurs de molécules biologiques immobilisées, telles que les acides nucléiques, les protéines, les sucres, les lipides sont avantageusement utilisés pour la détection et la reconnaissance d'espèces biologiques, ainsi que l'étude de leur fonctionnement et de leur rôle dans le milieu naturel.

Mais ces supports porteurs de molécules biologiques immobilisées ont d'autres applications telles que la séparation et la purification de molécules biologiques.

Les supports fonctionnalisés utilisés dans ces applications doivent avoir les caractéristiques suivantes :
- permettre l'immobilisation reproductible des molécules biologiques d'intérêt, et
- permettre l'immobilisation de molécules biologiques d'intérêt de façon sensible, la sensibilité d'un support solide fonctionnalisé dépendant du taux d'immobilisation et de la méthode de détection d'un signal mais aussi du niveau de bruit de fond.

L'immobilisation de molécules biologiques d'intérêt sur des supports s'effectue généralement en deux étapes :
- une première étape de fonctionnalisation des supports qui consiste en une modification chimique de leur surface par greffage d'agents de couplage qui vont assurer la fixation des molécules biologiques sur le support, et
- une deuxième étape d'immobilisation consistant à établir une interaction entre les molécules biologiques et les agents de couplage greffés sur le support, l'interaction pouvant consister en la formation d'une liaison covalente entre la molécule biologique et l'agent de couplage ou de liaisons plus faibles (telles que des interactions électrostatiques ou hydrophobes).

Les agents de couplage se greffent à la surface des supports par réaction avec des fonctions hydroxyles du support et des fonctions réactives de l'agent, pour former des liaisons covalentes entre l'agent de couplage et le support.

Différentes chimies de greffage permettant l'accrochage de molécules biologiques d'intérêt sur des surfaces par l'intermédiaire des agents de couplage existent, mais présentent le plus souvent des réactions qui ne sont pas toutes compatibles avec une utilisation en biologie, sans affecter les entités moléculaires à greffer sur cette surface.

Par ailleurs, ces réactions mettent souvent en jeu des fonctions chimiques pouvant réagir de façon non spécifiques avec des sites non désirés des molécules biologiques d'intérêt à immobiliser.

De plus, il est intéressant de pouvoir modifier des surfaces avec des cellules vivantes, des bactéries, des biomolécules complexes et fragiles telles que les métallo-enzymes, qui nécessitent des conditions de couplage très douces et les plus proches possibles des conditions du milieu du vivant.

Il existe assez peu de réactions de couplage utilisables en conditions du milieu vivant.

En effet, un tel couplage implique un certain nombre de contraintes :
- aucun des réactifs ou produits de la réaction ne doit être toxique,
- les produits réactifs doivent être inertes chimiquement vis-à-vis des groupes fonctionnels de l'entité moléculaire à greffer pour obtenir une meilleure spécificité de couplage, et
- la réaction doit avoir lieu rapidement en milieu aqueux, à pH et température physiologiques, si possible, et ne doit pas dépendre de la concentration en sels présents dans le milieu.

Toutes ces conditions rendent impossibles l'emploi des réactions nécessitant l'utilisation de catalyseurs métalliques ou de surfactants adaptées au milieu aqueux.

Les métaux sont en général toxiques, peuvent interagir avec de nombreuses molécules biologiques et modifier le fonctionnement des métallo-enzymes, ou perturber l'homéostase.

La demande de brevet EP 0 664 452 A2 décrit des composés silanes pour fonctionnaliser un substrat. Cependant, en particulier, aucun groupement cycloalcyne n'est présent dans ces composés silanes.

De même, les surfactants sont couramment utilisés pour détruire les parois cellulaires.

Il reste alors peu de réactions chimiques adaptées au travail sur tissus vivants, notamment permettant un greffage covalent.

Parmi, elles, la réaction de cycloaddition entre un azoture et un alcyne situé à l'intérieur d'un cycle carboné est décrite dans la demande de brevet US 2006/0110782 A1. Cette réaction a l'avantage d'être réalisée en condition douce et compatible avec la biologie :
- une réaction à température physiologique,
- une réaction dans l'eau, et
- aucun additif tel qu'un catalyseur métallique, ligand, ou base, n'est nécessaire.

Dans ce contexte, les inventeurs se sont fixés comme but de fournir de nouveaux composés silanes aptes à être greffés à la surface d'un support solide et comprenant des groupements permettant une réaction de cycloaddition pour immobiliser des entités biologiques d'intérêt tels que les cellules vivantes (eucaryotes ou procaryotes), de molécules biologiques (acides nucléiques, protéines, sucres, lipides), ainsi que toute autre molécule sensible.

Cette réaction de cycloaddition est réalisée dans des conditions du milieu vivant, à savoir dans l'eau, à température physiologique, et en l'absence de tout autre additif.

Ainsi, l'invention propose un composé silane caractérisé en ce qu'il a la formule I suivante :

X-E-A-Z Formule 1

dans laquelle :
- X est un groupe silylé apte à créer une liaison covalente après réaction avec les fonctions hydroxyles d'un support,
- E représente un groupe espaceur organique,
- A représente une liaison simple ou un groupe choisi parmi -CONH-, -NHCO-, -OCH₂CONH-, -NHCOCH₂O-, -O-, -S-, et
- Z représente un cycloalcyne ou un hétérocycloalcyne à au moins 8 chaînons de formule Z suivante : 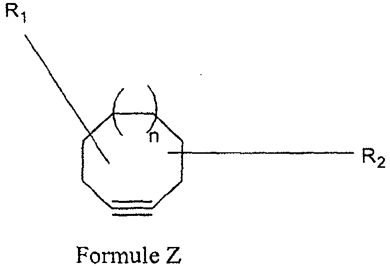 dans laquelle R₁ et R₂ représentent indépendamment l'un de l'autre, H, NO₂, Cl, Br, F, I, OR, SR, NR₂, R, NHCOR, CONHR, COOR avec R représentant un groupe alkyle ou aryle, n ≥ 1, et lorsque Z est un hétérocycloalcyne, l'hétéroatome est de préférence O ou S.

Les composés préférés de l'invention sont ceux dans lesquels la formule I, X est choisi parmi un groupe trihalogénosilane, un groupe trihydrogénosilane, un groupe trialcoxysilane -Si(OR₃)₃ avec R₃ représentant un groupe alkyle de 1 à 6 atomes de carbone, linéaire ou ramifié ou un groupe phényle; un groupe triaminoalkylsilane -Si(NR₄R₅)₃, avec R₄ et R₅ représentant indépendamment un groupe alkyle saturé de 1 à 6 atomes de carbone, linéaire ou ramifié ou un groupe phényle, ou un groupe organométallique.

De préférence, dans la formule 1, E représente un groupe hydrocarboné, comprenant éventuellement une ou plusieurs insaturations et/ou un ou plusieurs groupes aromatiques et/ou un ou plusieurs hétéroatomes.

Dans ce cas, de préférence, le groupe hydrocarboné comprend de 2 à 24 atomes de carbone.

Plus préférablement, le groupe hydrocarboné est un groupe alkylène comprenant de 2 à 24 atomes de carbone.

D'autres composés préférés ont la formule II suivante : 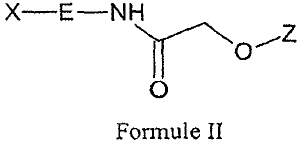 dans laquelle E représente un groupe alkylène comprenant de 2 à 24 atomes de carbone, et X, Z, R₁ et R₂ étant tels que définis ci-dessus pour les composés de formule I.

De préférence, dans la formule I, X est un groupe triéthoxysilane, E est une chaîne carbonée à 3 atomes de carbone, Z est un cyclooctine ou un hétérocyclooctine dont la triple liaison alcyne est en position alpha, l'hétéroatome de l'hétérocyclooctine étant de préférence O ou S, et R₁ et R₂ sont des atomes d'hydrogène, le composé ayant la formule III suivante :

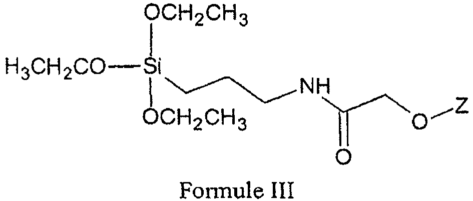

L'invention propose également un procédé de fonctionnalisation d'un support solide comportant en surface des fonctions hydroxyles, caractérisé en ce qu'il comprend une étape de mise en contact avec ledit support d'une solution comprenant au moins un composé silane selon l'invention et tel que définis dans ce qui précède.

De préférence, le procédé de fonctionnalisation de l'invention comprend avant l'étape de mise en contact, une étape de traitement de la surface du support afin de créer sur ladite surface les fonctions hydroxyles nécessaires au greffage.

Le support solide est un support organique ou un support inorganique.

De préférence, le support inorganique est un oxyde métallique, oxyde de silicium, verre, métal ou silicium.

Egalement de préférence, le support organique est en plastique, en polyimide, polycarbonate, cycloolefin polymère (COP).

L'invention propose aussi un support solide susceptible d'être obtenu par le procédé de fonctionnalisation de l'invention, caractérisé en ce qu'un composé selon l'invention est lié à la surface du support par l'intermédiaire du groupement X dudit composé.

L'invention propose encore un procédé d'immobilisation de molécules biologiques sur un support solide caractérisé en ce qu'il comprend :
a) une étape de mise en oeuvre du procédé de fonctionnalisation selon l'invention, et
b) une étape de mise en contact du support obtenu à l'étape a) avec une solution comprenant la (les) molécule(s) biologique(s) à immobiliser.

De préférence, la molécule biologique à immobiliser est choisie parmi les acides nucléiques, les protéines, les lipides, les sucres, les cellules, les bactéries.

Mais l'invention propose également un procédé de scellement de deux supports solides caractérisé en ce qu'il comprend :
a) une étape de mise en contact d'un support solide comportant en surface des fonctions hydroxyles, ou d'un support solide comportant en surface des fonctions azotures, avec un composé selon l'invention, et
b) une étape de mise en contact du support obtenu à l'étape a) avec un support solide comportant en surface des fonctions azotures, lorsque le support solide obtenu à l'étape a) comporte des fonctions hydroxyles, ou avec un support solide comportant des fonctions hydroxyles, lorsque le support utilisé à l'étape a) comporte en surface des fonctions azotures.

Lesdits supports solides peuvent être des supports en un matériau choisi parmi un oxyde métallique, de l'oxyde de silicium, du verre, un métal ou du silicium.

De préférence, les supports solides sont en silicium.

La structure obtenue par le procédé de scellement de l'invention est aussi un objet de l'invention.

Cette structure est caractérisée en ce qu'elle consiste en deux supports solides scellés entre eux par un composé ayant la formule IV suivante : 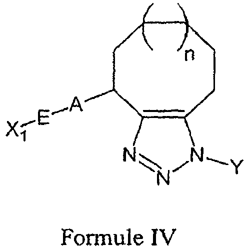
dans laquelle E, A et n sont tels que définis pour les composés de l'invention,
X₁ est un groupe silylé tel que défini pour X pour les composés de l'invention ayant réagi avec une fonction hydroxyle,
Y est une liaison covalente ou un espaceur organique.

Bien entendu, le cycloalcéne de la formule IV peut comprendre un hétéroatome, de préférence choisi entre O et S, lorsque le composé utilisé pour le scellement des deux supports était un hétérocycloalcyne.

L'invention sera mieux comprise et d'autres caractéristiques et avantages de celle-ci apparaîtront plus clairement à la lecture de la description explicative qui suit.

Les composés silanes de l'invention sont aptes à être greffés à la surface d'un support solide, cette surface comportant des fonctions hydroxyles.

Dans l'invention, par « surface comportant des fonctions hydroxyles », on entend une surface comportant majoritairement des fonctions hydroxyles ou une surface comportant majoritairement des fonctions hydrures mais partiellement oxydée, cette oxydation menant à la formation de fonctions hydroxyles à partir des fonctions hydrures.

Les composés de l'invention ont une première fonctionnalité qui est un groupe silylé apte à créer une liaison covalente après réaction avec les fonctions hydroxyles du support.

Ce groupe silylé permet la fixation covalente du composé silane de l'invention sur les fonctions hydroxyles d'un support.

Le support peut être par exemple, un support solide en silicium, en oxyde d'indium et d'étain (ITO) en titane ou en plastique.

Il peut être également en oxyde de silicium, en verre ou en un autre métal.

Le support peut également être un support organique en plastique, en polyimide, en polycarbonate ou en polymère cyclooléfinique (COP).

Les composés silanes de l'invention sont également aptes à être engagés dans une réaction de cycloaddition pour immobiliser des entités biologiques d'intérêts.

Ainsi, les composés silanes de l'invention ont une seconde fonctionnalité qui est un cycloalcyne ou un hétérocycloalcyne de formule Z suivant :

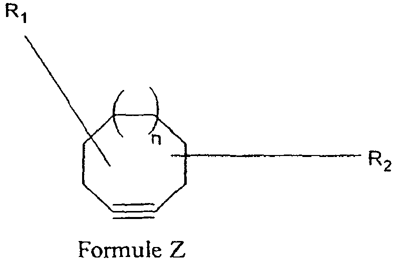

Le cycloalcyne ou, le cas échéant l'hétérocycloalcyne, a au moins 8 chaînons. C'est pourquoi dans la formule Z ci-dessus, n est supérieur ou égal à 1.

Lorsque Z est un hétérocycloalcyne, l'hétéroatome est de préférence O ou S.

Il comporte également au moins une insaturation à trois liaisons, c'est-à-dire une fonction alcyne, à l'une quelconque des positions à l'intérieur du cycle.

La fonctionnalité de formule Z ci-dessus peut également comporter des substituants.

Ces substituants notés R₁ et R₂ dans la formule Z ci-dessus représentent, indépendamment l'un de l'autre, un atome d'hydrogène, un atome de chlore, un atome de brome, un atome de fluor, un atome d'iode, un groupement NO₂ ou encore un groupement OR, ou SR, ou NR₂, ou R, ou NHCOR, ou CONHR, ou COOR avec R représentant un groupe alkyle ou aryle.

De préférence, R₁ et R₂ représentent H.

C'est avec la fonction alcyne (triple liaison) que la réaction de cycloaddition pour immobiliser les entités biologiques d'intérêts se fera.

Plus précisément, les deux fonctionnalités, c'est-à-dire le groupe silylé et la fonctionnalité de formule Z sont de préférence séparées l'une de l'autre par une groupe espaceur et/ou un groupe choisi parmi -CONH-, -NHCO-, -OCH₂CONH-, -NHCOCH₂O-,-O-, -S-.

Plus précisément, les composés silanes de l'invention ont la formule 1 suivante :

X-E-A-Z Formule 1

dans laquelle :
- X est un groupe silylé apte à créer une liaison covalente après réaction avec les fonctions hydroxyles d'un support,
- E représente un groupe espaceur organique,
- A représente une liaison simple ou un groupe choisi parmi -CONH-, -NHCO-, -OCH₂CONH-, -NHCOCH₂O-, -O-, -S-, et
- Z représente un cycloalcyne ou un hétérocycloalcyne à au moins 8 chaînons de formule Z suivante : 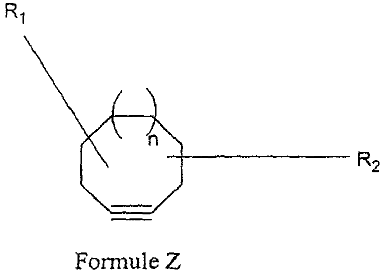 dans laquelle R₁ et R₂ représentent indépendamment l'un de l'autre, H, NO₂, Cl, Br, F, I, OR, SR, NR₂, R, NHCOR, CONHR, COOR avec R représentant un groupe alkyle ou aryle, et n ≥ 1 et, lorsque Z est un hétérocycloalcyne, l'hétéroatome est de préférence O ou S.

Dans la formule I, X représente le groupe silylé apte à créer une liaison covalente après réaction avec les fonctions hydroxyles d'un support.

Comme on l'a déjà dit, les fonctions hydroxyles peuvent également être obtenues par la combinaison de fonctions hydrures majoritairement présentes à la surface du support et une légère oxydation de ce support.

Ce groupe X peut être par exemple, un groupe trihalogénosilane, tel qu'un groupe trifluorosilane, ou un groupe trichlorosilane, un groupe trihydrogénosilane, un groupe trialcoxysilane (Si(OR₄)₃ avec R₄ représentant un groupe alkyle saturé de 1 à 6 atomes de carbone, linéaire ou ramifié, un groupe phényle, tel qu'un groupe triméthoxysilane, un groupe triéthoxysilane, un groupe triisopropoxysilane, un groupe triaminoalkylsilane -Si(NR₅R₆)₃, avec R₅ et R₆ représentant indépendamment un groupe alkyle saturé de 1 à 6 atomes de carbone, linéaire ou ramifié, un groupe phényle, ou un groupe organométallique, tel qu'un groupe organomagnésien ou organolithien, ou encore un groupe hydrolysable.

Dans la formule I, le groupe E est un groupe espaceur organique.

Sa fonction essentielle est de conférer des propriétés particulières au film résultant du greffage des composés silanes à la surface d'un support.

Ce groupe E est généralement un groupe hydrocarboné comprenant, de préférence, de 2 à 24 atomes de carbone, et comprenant éventuellement une ou plusieurs insaturations et/ou un ou plusieurs groupes aromatiques et/ou un ou plusieurs hétéroatomes.

A titre d'exemple, le groupe E peut être un groupe alkylène, c'est-à-dire un enchaînement du type -CH₂-, comprenant, par exemple, de 8 à 24 atomes de carbone.

Ce type de groupes confère aux composés silanes, une fois greffés sur un support, une capacité à interagir entre eux, par création d'interactions inter-chaînes et ainsi contribue à l'obtention de monocouches organisées sur la surface du support.

Le groupe E peut également être un groupe fluoroalkylène comprenant de 3 à 24 atomes de carbone.

Ces groupes contribuent à conférer au film résultant du greffage des composés silanes les comprenant, des propriétés permettant leur utilisation en chromatographie et en électrophorèse.

Mais le groupe E peut être un groupe hydrocarboné comprenant une ou plusieurs insaturations tels qu'un groupe du type alcènique.

Un exemple d'un tel groupe est un groupe alkylène tel que défini ci-dessus interrompu par une ou plusieurs insaturations alcèniques.

Lorsque le groupe E comporte au moins deux insaturations, il confère aux composés silanes, une fois greffés sur un support, une capacité à se réticuler.

Le groupe E peut être également un groupe hydrocarboné comprenant un ou plusieurs groupes aromatiques.

On peut citer, par exemple, un groupe comprenant des groupes aromatiques conjugués avec des groupes linéaires insaturés, tel qu'un groupe résultant de l'enchaînement d'un motif phénylène-vinylène.

Ces groupes contribuent à conférer au film résultant du greffage des composés silanes les comprenant, des propriétés optiques non linéaires.

Le groupe E peut aussi être un groupe comprenant des motifs pyrrole ou thiophène.

Ces groupes contribuent à conférer au film résultant du greffage des composés silanes les comprenant, des propriétés de conductions électroniques.

Un groupe préféré est un groupe comprenant un ou plusieurs cycles aromatiques substitués par un ou plusieurs groupes aromatiques, tel qu'un groupe comprenant un enchaînement de motifs quinones ou de motifs diazoïques.

Ces groupes contribuent à conférer au film résultant du greffage des composés silanes les comprenant, des propriétés de photo/électroluminescence.

Une première famille de composés silanes selon l'invention est une famille dans laquelle A est un groupe de formule -NHCOCH₂O-.

Les composés de cette première famille préférée de composés de l'invention ont la formule II suivante : 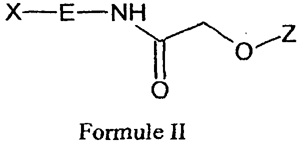 dans laquelle X, E, R₁, R₂ et Z sont tels que définis précédemment.

Les composés plus particulièrement préférés de l'invention sont ceux dans lesquels A est un groupe de formule -NHCOCH₂O- et E est un groupe alkylène comprenant de 3 à 24 atomes de carbone.

On préfère encore plus particulièrement dans l'invention, les composés dans lesquels A est -NHCOCH₂O-, E est un groupe alkylène à 3 carbones, X est un groupe -Si(OCH₂CH₃)₃, Z est un cycle carboné à 8 chaînons, R₁, R₂ sont des atomes d'hydrogène et le groupement A est lié en a de la triple liaison.

Ces composés tout particulièrement préférés de l'invention ont la formule III suivante :

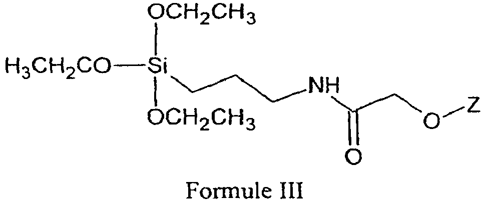

Ces composés permettent de fonctionnaliser un support solide comportant en surface des fonctions hydroxyles.

L'invention propose donc un procédé de fonctionnalisation d'un support solide comportant en surface des fonctions hydroxyles qui comprend une étape de mise en contact d'une solution comprenant au moins un composé silane selon l'invention avec ledit support.

Ce procédé peut comprendre préalablement une étape de traitement de la surface du support afin de créer sur cette surface des fonctions hydroxyles nécessaires au greffage.

Bien entendu, l'invention propose également un support solide susceptible d'être obtenu par le procédé de fonctionnalisation de l'invention.

Ce support solide est caractérisé en ce qu'un composé selon l'invention est lié à la surface du support par l'intermédiaire du groupement silylé du composé de l'invention.

La fonctionnalisation d'un support solide avec le composé selon l'invention permet l'immobilisation de molécules biologiques sur un support solide.

L'invention propose ainsi un procédé d'immobilisation de molécules biologiques sur un support solide.

Ce procédé d'immobilisation comprend une étape de mise en oeuvre du procédé de fonctionnalisation d'un support solide selon l'invention et une étape de mise en contact du support ainsi obtenu avec une solution comprenant la ou les molécule(s) biologique(s) à immobiliser.

Mais, comme cela apparaîtra clairement à l'homme de l'art, on peut également, tout d'abord mettre en contact un composé selon l'invention avec la molécule à immobiliser puis mettre en oeuvre le procédé de fonctionnalisation d'un support solide selon l'invention.

Dans les deux cas, la molécule biologique à immobiliser est de préférence choisie parmi les acides nucléiques, les protéines, les lipides, les sucres, les cellules et les bactéries.

Mais encore, les composés de l'invention et le procédé de fonctionnalisation d'un support solide selon l'invention permettent également de sceller deux supports solides ensemble.

Le procédé de scellement de deux supports solides comprend une étape de mise en oeuvre du procédé de fonctionnalisation d'un support solide selon l'invention avec un composé selon l'invention et une étape de mise en contact du support ainsi obtenu avec un second support solide liant au moins une surface comportant des fonctions azotures.

Les fonctions azotures réagiront alors avec la triple liaison du groupe Z des composés de l'invention.

Cependant, là encore, comme cela apparaîtra clairement à l'homme de l'art, le procédé de scellement de deux surfaces solides selon l'invention peut également comprendre la mise en contact d'un composé selon l'invention avec un support solide et ayant au moins une surface comportant des fonctions azotures et ensuite seulement, l'étape de mise en contact du support solide comportant les composés de l'invention liés aux fonctions azotures du premier support avec un second support comprenant au moins une surface comportant des fonctions hydroxyles, c'est-à-dire le procédé de fonctionnalisation selon l'invention.

Dans tous les cas, les supports solides peuvent être des supports organiques ou inorganiques.

Plus particulièrement, ils peuvent êtres choisis parmi un oxyde métallique, de l'oxyde de silicium, du verre, un métal ou du silicium ou encore du plastic, un polyimide, du polycarbonate, un polymère cyclooléfinique.

La structure obtenue par mise en oeuvre du procédé de scellement de deux supports solides de l'invention est également un objet de l'invention.

Cette structure consiste en deux supports solides scellés entre eux par un composé de formule IV suivante : 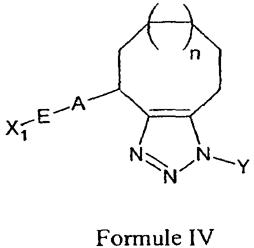 dans laquelle E et A sont tels que définis pour les composés de l'invention, n est supérieur ou égal à 1, et X₁ est un groupe silylé tel que défini pour X pour les composés de l'invention mais ayant réagi avec une fonction hydroxyle, Y est une liaison covalente ou un espaceur organique tel que défini pour E, et le cycle cycloalcène peut comprendre un hétéroatome, de préférence O ou S.

Dans cette structure, le premier support est lié à X₁ et le second support est lié à Y.

La synthèse des composés silanes de l'invention peut être effectuée par des procédés connus de l'homme du métier.

A titre d'exemple, pour obtenir des composés dans lesquels E est un groupe alkylène, A est -NHCOCH₂O-, et X est un groupe -Si(OR₃)₃, la préparation peut s'envisager en deux étapes selon le schéma réactionnel suivant.
1) Réaction d'un composé carboxylique portant le cycle carboné Z avec une chaîne alcène aminée par l'intermédiaire de la réaction de couplage peptidique en présence du dicyclocarbodiimide (DDC) 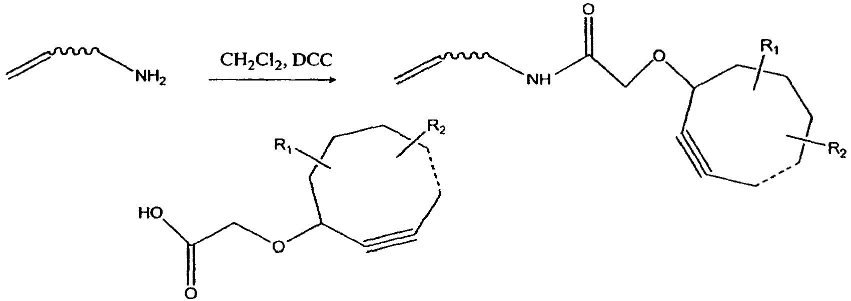 La liaison ondulée de la chaîne alcène aminée se situant entre l'extrémité portant la double liaison et l'extrémité portant la fonction NH₂ représente un groupe hydrocarboné de longueur variable et relie la double liaison à la fonction NH₂.
2) Les composés obtenus à l'issue de l'étape 1) sont ensuite soumis à une réaction d'hydrosilylation avec un réactif du type HSi(OR₃)₃, en présence d'un catalyseur de Karstedt Pt[Si(CH₃)₂HC= CH₂]₂O selon le schéma réactionnel suivant :

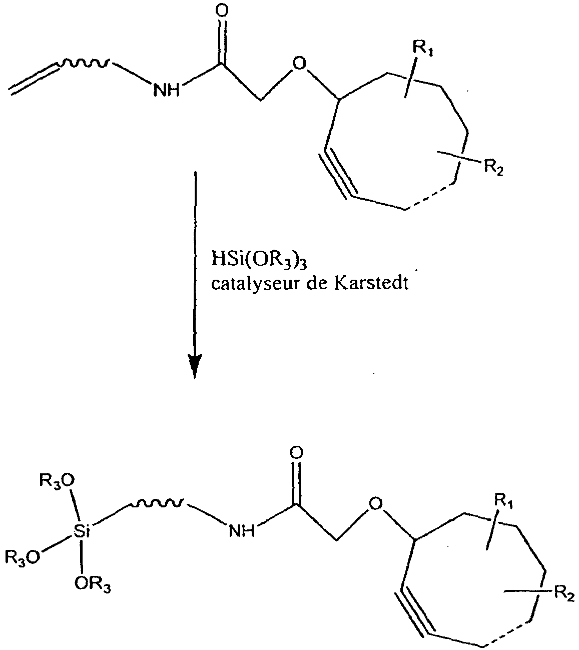

L'homme du métier adaptera ces schémas de synthèse en fonction des composés silanes qu'il souhaite obtenir.

Comme mentionné précédemment, les composés silanes de l'invention sont susceptibles de se greffer à la surface d'un support, en raison de la présence du groupe X apte à réagir avec des fonctions hydroxyles présentes sur la surface du support pour former des liaisons covalentes.

Ainsi, l'invention a également trait à un procédé de fonctionnalisation d'un support solide comportant en surface des fonctions hydroxyles, comprenant une étape de mise en contact d'une solution comprenant au moins un composé silane tel que défini ci-dessus avec ledit support.

Ce procédé peut comprendre préalablement une étape de traitement de la surface du support afin de créer sur ladite surface les fonctions hydroxyles nécessaires au greffage.

Ainsi, pour un support en silicium 1, 0, 0 (par exemple, du type wafer), il est préférable, avant fonctionnalisation, de traiter celui-ci en le mettant en contact avec une solution de soude afin de générer des fonctions silanols.

Les supports pouvant être fonctionnalisés selon le procédé de l'invention peuvent être des supports organiques (par exemple en matériaux plastiques), des supports inorganiques, par exemple des supports en oxyde métallique (par exemple, silice et ses dérivés comme le verre, le quartz, oxyde d'indium et d'étain), des supports métalliques (tels que les supports en titane) ou des supports en silicium, l'essentiel étant que ces supports soient susceptibles (éventuellement avec l'étape de traitement préalable mentionnée ci-dessus) de présenter des fonctions hydroxyles à la surface pour le greffage des composés silanes de l'invention.

L'invention a également pour objet le support solide fonctionnalisé susceptible d'être obtenu par le procédé de l'invention.

De par la nature du groupe alcyne présent à l'intérieur du cycle porté par les composés silanes, lesquels, une fois greffés sur la surface du support, ont la capacité d'interagir avec des molécules biologiques pour les immobiliser sur les supports.

La présente invention a donc pour objet un procédé d'immobilisation de molécules biologiques sur un support solide fonctionnalisé comprenant les étapes suivantes :
a) une étape de mise en oeuvre du procédé de fonctionnalisation du support tel que défini ci-dessus ;
b) une étape de mise en contact du support obtenu à l'étape a) avec une solution comprenant la (les) molécule(s) biologique(s) à immobiliser.

Afin de mieux faire comprendre l'invention, on va en donner, à titre purement illustratif et non limitatif, un exemple de mise en oeuvre.

### Exemple 1 : Synthèse de silane cyclo-octyne

Ce composé est synthétisé selon le schéma général suivant :

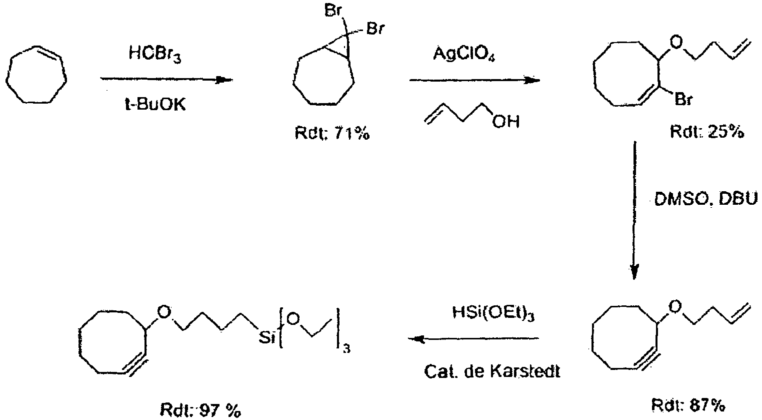

La fonction vinylique est incorporée par une réaction de substitution nucléophile entre le 8,8 dibromobicyclo[5.1.0]octane et le 3-buten-1-ol.

Le groupement acétylène est obtenu par une étape de débromation dans le diméthylsulfoxide a chaud. La terminaison par le groupement silane se fait par une hydrosilylation.

Mode opératoire et conditions des réactions.

### (1) 8,8-dibromobicyclo[5.1.0]octane :

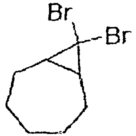

Dans un ballon sec et sous argon le cycloheptène (6,6ml), le t-BuOK (12,56g ; 1,95 éq) sont dissous dans 100 ml de pentane anhydre. La solution jaune crème est agitée vigoureusement et placée dans un bain de glace/sel. Puis le bromoforme (7,3ml ; 1,46 éq) est ajouté au goutte à goutte. Le mélange est ensuite laissé revenir à température ambiante pendant la nuit, sous argon et agitation vigoureuse.

A cette solution sont ajoutée 50 mL d'eau et le pH est neutralisé avec HCl (1M). Les phases aqueuses et organiques sont séparées ; la phase aqueuse est extraite avec 3 x20 mL de cyclohexane et la phase organique est extraite avec 3x20 mL d'eau. La phase organique est séchée sur MgSO₄, filtrée et purifiée par chromatographie flash (cyclohexane/AcOEt 95 :5) pour obtenir le composé 1 sous forme d'une huile incolore (10,77 g ; 40,18 mmol ; 71%) qui est le 8,8 dibromobicyclo [5.1.0]octante voulu.
RMN¹H (CDCl₃, 200 MHz) : δ (ppm) 1,05-1,22 (m, 3H) ; 1,34 (qq, J = 1-7,5 Hz, 2H) ; 1,68 (ddd, J = 1,5-4-10,5 Hz, 2H) ; 1,76-1,92 (m, 3H) ; 2,23 (dtq, J = 14-6-1 Hz, 2H) ;
RMN¹³C (CDCl₃, 200 MHz) : δ (ppm) 40,7 (C₈ quat.) ; 34,8 (2, C₁₋₇) ; 32,2 (C₄); 28,9 (2, C₂₋₆) ; 27,9 (2, C₃₋₅).

### (2) (E)-1-bromo-8-(but-3-enyloxy)cyclooct-1-ène:

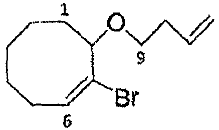

Le composé 1 (2,73g ; 10,18 mmol) et le 3-butèn-1-ol (8,75 mL ; 100,7 mmol ; 10 éq) est placé dans du toluène anhydre (50 mL) dans un ballon enveloppé d'aluminium. AgClO₄ (6,33 g ; 30,53 mmol ; 3 éq) est ajouté et la suspension est agitée pendant 48h à température ambiante. Après addition de 150 mL d'AcOEt et filtration, la solution est lavée dans l'eau déionisée. La phase organique récupérée est séchée sur MgSO₄, filtrée et purifiée par chromatographie flash (cyclohexane/AcOEt 99:1). Le produit 2 obtenu (1,45g ; 5,59 mmol ; 55%) est sous la forme d'une huile jaune.
RMN¹³C (CDCl₃, 200 MHz) : δ (ppm) 26,66 ; 28,56 ; 33,66 ; 34,46 ; 36,91 (C₁₋₅) ; 39,99 (C₁₀) ; 68,56 (C₉) ; 85,41 (C₈) ; 116,35 (C₁₂) ; 131,57 (C₇) 133,85 (C₆) ; 135,64 (C₁₁).

### (3) 3-(but-3-enyloxy)cyclooct-1-yne :

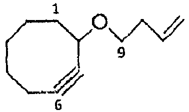

Le composé 2 (2,04 g ; 7,8 mmol) est dissout dans du DMSO anhydre (10 mL) et chauffé à 60°C. Le DBU (2,3 mL ; 2éq) est ajouté, et la solution est agitée pendant 15 min avant de rajouter du DBU (4,6 mL ; 4 éq) et d'agiter pendant 15 min de nouveau. Enfin on ajoute une dernière fois du DBU (4,6 mL ; 4 éq) et la solution est agitée a 60°C pendant la nuit et ensuite laissée revenir à température ambiante. A cette solution sont ajoutée 150 mL d'AcOEt et l'extraction se fait avec HCl (1M). Lorsque le pH devient basique la phase organique est lavée à l'eau jusqu'à le neutraliser. La phase extraite est séchée sur MgSO₄, filtrée et purifiée par chromatographie flash (cyclohexane/AcOEt 99:1) pour obtenir le composé 3 (1,22 g ; 6,8 mmol ; 87%) un liquide incolore.
RMN¹H (CDCl₃, 200 MHz) : δ (ppm) 1,20-2,3 (m, 10H) ; 2,39 (dd, J_{10-10'}=6,67 Hz, 2H, H₁₀) ; 3,4 (d, J_{9-9'}=51,81 Hz, 2H, H₉) ; 4,2 (m, 1H, H₈) ; 5,08 (m, J₁₂₋₁₂=11,44 H_{z}, 2H, H₁₂) ; 5,84 (m, 1H, H₁₁),
RMN¹³C (CDCl₃, 200 MHz) : δ(ppm) 20,6 ; 23,5 ; 26,4 ; 29,7 (C₂₋₅) ; 34,3 (C₁₀) ; 42,2 (C₁) ; 68,5 (C₉) 72,3 (C₈) ; 93 (C₇) 99,8 (C₆) 116,2 (C₁₁) 135,2 (C₁₂).

### (4) (4-(cyclooct-2-ynyloxy)butyl)triéthoxysilane :

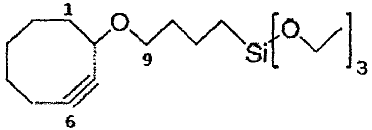

Le composé 3 (1,28 g; 7,18 mmol) est mélangé avec du triéthoxysilane (3,6 mL). Le catalyseur de Karstedt est additionné très lentement en quantité catalytique (10 gouttes). La réaction se déroule à 45°C pendant trois jours. Le produit est purifié par chromatographie flash (AcOEt 100%) pour donner un liquide brun (2,4 g; 7 mmol; 97%).
RMN¹H (CDCl₃, 200 MHz) : δ (ppm) 1,4-2 (m, 10H) ; 3,54 (m, J_{9-9'}=39,1 Hz, 2H, H₉) ; 4,31 (m, 1 H, H₈),
RMN¹³C (CDCl₃, 200 MHz) : δ (ppm) 14,6 (C₁₂) 18 ; 20 ; 26,5 ; 27,2 ; 34,1 (C₁₋₅) ; 58,6 (C₁₃x3) ; 79 (C₈).

### Exemple 2 : Greffage du composé de l'exemple 1

Protocole de silanisation de surface (Si/SiO₂) : 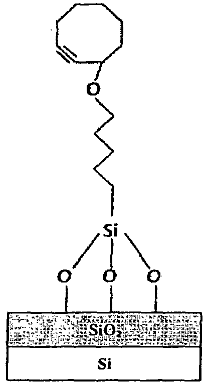
1) Réhydratation par la méthode de Brown : Solution NaOH dans un mélange d'eau déionisée (EDI)/EtOH sous agitation pendant 2h00, puis rinçage a l'EDI.
2) Silanisation : solution de silane dans le trichloréthylène pendant une nuit à température ambiante puis rinçage au trichloréthylène, chloroforme et EtOH sous ultrasons.
3) Réticulation : chauffage a 120°C pendant 3h00.

### Exemple 3 : Immobilisation de molécules par chimie clic sur la surface via le silane :

Pour mettre en évidence la réaction "clic" sur le support modifié obtenu à l'exemple 2, il a été décidé de faire une réaction "clic" entre la fonction cyclo-octyne en surface et le groupement azoture d'un mannose (Mannose acétylé modifié N3 de formule : 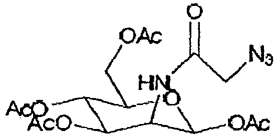 Ce mannose a été choisi car il présente de nombreuses liaisons C=O.

Une trace de mannose est détectable sur le spectre du silane; en effet on distingue une bande à 1750 cm⁻¹ qui est caractéristique de la liaison C=O.

## Revendications

1. Composé silane **caractérisé en ce qu'**il a la formule 1 suivante :
X-E-A-Z Formule I
dans laquelle :
- X est un groupe silylé apte à créer une liaison covalente après réaction avec les fonctions hydroxyles d'un support,
- E représente un groupe espaceur organique,
- A représente une liaison simple ou un groupe choisi parmi -CONH-, -NHCO-, -OCH₂CONH-, -NHCOCH₂O-, -O-, -S-, et
- Z représente un cycloalcyne ou un hétérocycloalcyne à au moins 8 chaînons de formule Z suivante : 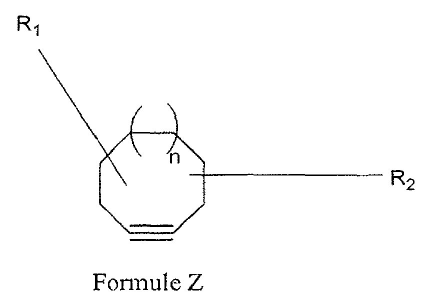 dans laquelle R₁ et R₂ représentent indépendamment l'un de l'autre, H, NO₂, Cl, Br, F, I, OR, SR, NR₂, R, NHCOR, CONHR, COOR avec R représentant un groupe alkyle ou aryle, n ≥ 1 et, lorsque Z est un hétérocycloalcyne, l'hétéroatome, est de préférence O ou S.

2. Composé selon la revendication 1, **caractérisé en ce que** dans la formule I, X est choisi parmi un groupe trihalogénosilane, un groupe trihydrogénosilane, un groupe trialcoxysilane -Si(OR₃)₃ avec R₃ représentant un groupe alkyle de 1 à 6 atomes de carbone, linéaire ou ramifié ou un groupe phényle; un groupe triaminoalkylsilane -Si(NR₄R₅)₃, avec R₄ et R₅ représentant, indépendamment l'un de l'autre, un groupe alkyle saturé de 1 à 6 atomes de carbone, linéaire ou ramifié ou un groupe phényle, ou un groupe organométallique.

3. Composé selon la revendication 1 ou 2, **caractérisé en ce que** dans la formule I, E représente un groupe hydrocarboné, comprenant éventuellement une ou plusieurs insaturations et/ou un ou plusieurs groupes aromatiques et/ou un ou plusieurs hétéroatomes.

4. Composé selon la revendication 3, **caractérisé en ce que** le groupe hydrocarboné comprend de 2 à 24 atomes de carbone.

5. Composé selon la revendication 4, **caractérisé en ce que** le groupe hydrocarboné est un groupe alkylène comprenant de 2 à 24 atomes de carbone.

6. Composés selon l'une quelconque des revendications précédentes, **caractérisé en ce qu'**ils ont la formule II suivante : 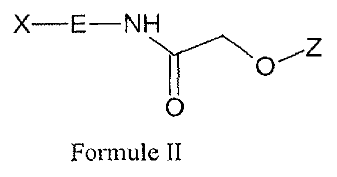 dans laquelle E représente un groupe alkylène comprenant de 2 à 24 atomes de carbone, et X, Z, R₁ et R₂ sont tels que définis à la revendication 1.

7. Composé silane selon l'une quelconque des revendications précédentes, **caractérisé en ce que** dans la formule I, X est un groupe triéthoxysilane, E est une chaîne carbonée à 3 atomes de carbone, Z est un cyclooctine ou un hétérocyclooctine dont la triple liaison alcyne est en position alpha, l'hétéroatome de l'hétérocyclooctine étant de préférence O ou S, et R₁ et R₂ sont des atomes d'hydrogène, le composé ayant la formule III suivante :

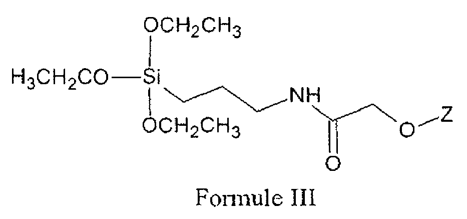

8. Procédé de fonctionnalisation d'un support solide comportant en surface des fonctions hydroxyles, **caractérisé en ce qu'**il comprend une étape de mise en contact avec ledit support d'une solution comprenant au moins un composé silane selon l'une quelconque des revendications 1 à 7.

9. Procédé selon la revendication 8, **caractérisé en ce qu'**il comprend avant l'étape de mise en contact, une étape de traitement de la surface du support afin de créer sur ladite surface les fonctions hydroxyles nécessaires au greffage.

10. Procédé selon les revendications 8 ou 9, **caractérisé en ce que** le support solide est un supports organique ou un support inorganique.

11. Procédé selon la revendication 10, **caractérisé en ce que** le support inorganique est un oxyde métallique, oxyde de silicium, verre, métal ou silicium.

12. Procédé selon la revendication 10, **caractérisé en ce que** le support organique est en plastique, en polyimide, polycarbonate, cycloolefin polymère (COP).

13. Support solide susceptible d'être obtenu par le procédé selon l'une quelconque des revendications 8 à 12, **caractérisé en ce qu'**un composé selon l'une quelconque des revendications 1 à 7 est lié à la surface du support par l'intermédiaire du groupement X dudit composé.

14. Procédé d'immobilisation de molécules biologiques sur un support solide **caractérisé en ce qu'**il comprend :
a) une étape de mise en oeuvre du procédé selon l'une quelconque des revendications 8 à 12, et
b) une étape de mise en contact du support obtenu à l'étape a) avec une solution comprenant la (les) molécule(s) biologique(s) à immobiliser.

15. Procédé d'immobilisation selon la revendication 14, dans lequel la molécule biologique à immobiliser est choisie parmi les acides nucléiques, les protéines, les lipides, les sucres, les cellules, les bactéries.

16. Procédé de scellement de deux supports solides **caractérisé en ce qu'**il comprend :
a) une étape de mise en contact d'un support solide comportant en surface fonctions azotures, avec un composé selon l'une quelconque des revendications 1 à 7, et
b) une étape de mise en contact du support obtenu à l'étape a) avec un support solide comportant en surface des fonctions azotures, lorsque le support solide obtenu à l'étape a) comporte des fonctions hydroxyles, ou avec un supports solide comportant des fonctions hydroxyles, lorsque le support utilisé à l'étape a) comporte en surface des fonctions azotures.

17. Procédé selon la revendication 16 **caractérisé en ce que** lesdits supports solides sont des supports en un matériau choisi parmi un oxyde métallique, de l'oxyde de silicium, du verre, un métal ou du silicium.

18. Procédé selon la revendication 16 ou 17 **caractérisé en ce que** les supports solides sont en silicium.

19. Structure susceptible d'être obtenue par le procédé selon l'une quelconque des revendications 16 à 18, **caractérisée en ce qu'**elle consiste en deux supports solides scellés entre eux par un composé ayant la formule IV suivante : 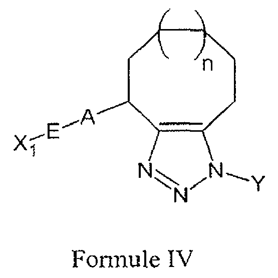
dans laquelle E, A et n sont tels que définis dans l'une quelconque des revendications 1 à 7,
X₁ est un groupe silylé tel que défini pour X dans l'une quelconque des revendications 1 à 7 mais ayant réagi avec une fonction hydroxyle,
Y est une liaison covalente ou un espaceur organique, et
- le cycloalcène peut comprendre un hétéroatome, de préférence O ou S.

## Patentansprüche

1. Silanverbindung, **dadurch gekennzeichnet, dass** sie die folgende Formel I hat:
X-E-A-Z Formel 1
in der:
- X eine Silylgruppe ist, die in der Lage ist, nach Reaktion mit Hydroxylfunktionen eines Trägers eine kovalente Bindung zu erzeugen,
- E eine organische Spacergruppe darstellt,
- A eine Einfachbindung oder eine Gruppe, ausgewählt aus
- CONH-, -NHCO-, -OCH₂CONH-, -NHCOCH₂O-, -O-, -S-, darstellt und
- Z ein Cycloalkin oder ein Heterocycloalkin mit wenigstens 8 Kettengliedern der folgenden Formel Z darstellt: 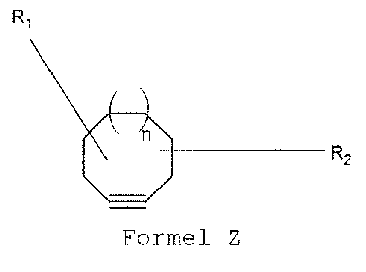 in der R₁ und R₂ unabhängig voneinander H, NO₂, Cl, Br, F, I, OR, SR, NR₂, R, NHCOR, CONHR, COOR darstellen, wobei R eine Akyl- oder Arylgruppe darstellt, n ≥ 1 und, wenn Z ein Heterocycloalkin ist, das Heteroatom vorzugsweise 0 oder S ist.

2. Verbindung gemäß Anspruch 1, **dadurch gekennzeichnet, dass** in der Formel I X ausgewählt ist aus einer Trihalogensilan-Gruppe, einer Trihydrogensilan-Gruppe, einer Trialkoxysilan-Gruppe -Si(OR₃)₃, wobei R₃ eine lineare oder verzweigte Alkylgruppe mit 1 bis 6 Kohlenstoffatomen oder eine Phenylgruppe darstellt, eine Triaminoalkylsilan-Gruppe -Si(NR₄R₅)₃, wobei R₄ und R₅ unabhängig voneinander eine lineare oder verzweigte gesättigte Alkylgruppe mit 1 bis 6 Kohlenstoffatomen oder eine Phenylgruppe darstellen, oder einer metallorganischen Gruppe.

3. Verbindung gemäß Anspruch 1 oder 2, **dadurch gekennzeichnet, dass** in Formel I E eine Kohlenwasserstoffgruppe darstellt, die gegebenenfalls eine oder mehrere Ungesättigtheiten und/oder eine oder mehrere aromatische Gruppen und/oder ein oder mehrere Heteroatome umfasst.

4. Verbindung gemäß Anspruch 3, **dadurch gekennzeichnet, dass** die Kohlenwasserstoffgruppe 2 bis 24 Kohlenstoffatome umfasst.

5. Verbindung gemäß Anspruch 4, **dadurch gekennzeichnet, dass** die Kohlenwasserstoffgruppe eine Alkylengruppe ist, die 2 bis 24 Kohlenstoffatome umfasst.

6. Verbindungen gemäß einem der vorangehenden Ansprüche, **dadurch gekennzeichnet, dass** sie die folgende Formel II haben: 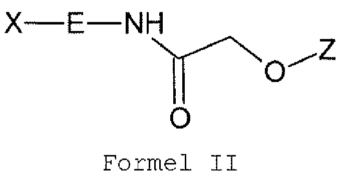 in der E eine Alkylengruppe darstellt, die 2 bis 24 Kohlenstoffatome umfasst, und X, Z, R₁ und R₂ wie in Anspruch 1 definiert sind.

7. Silanverbindung gemäß einem der vorangehenden Ansprüche, **dadurch gekennzeichnet, dass** in der Formel I X eine Triethoxysilangruppe ist, E eine Kohlenstoffkette mit 3 Kohlenstoffatomen ist, Z ein Cyclooctin oder ein Heterocyclooctin ist, bei dem die Alkin-Dreifachbindung in alpha-Position ist, wobei das Heteroatom des Heterocyclooctins vorzugsweise O oder S ist und R₁ und R₂ Wasserstoffatome sind, wobei die Verbindung die folgende Formel III hat:

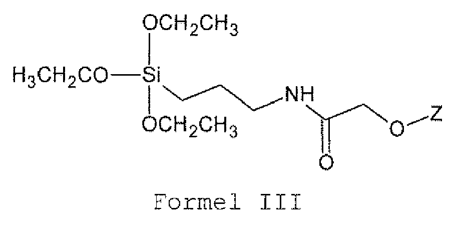

8. Verfahren zur Funktionalisierung eines festen Trägers, der an der Oberfläche Hydroxylfunktionen trägt, **dadurch gekennzeichnet, dass** es eine Stufe umfasst, in welcher der genannte Träger mit einer Lösung in Kontakt gebracht wird, die wenigstens eine Silanverbindung gemäß einem der Ansprüche 1 bis 7 umfasst.

9. Verfahren gemäß Anspruch 8, **dadurch gekennzeichnet, dass** es vor der Stufe des Inkontaktbringens eine Stufe der Behandlung der Oberfläche des Trägers umfasst, um auf der Oberfläche die für die Pfropfung erforderlichen Hydroxylfunktionen zu schaffen.

10. Verfahren gemäß Anspruch 8 oder 9, **dadurch gekennzeichnet, dass** der feste Träger ein organischer Träger oder ein anorganischer Träger ist.

11. Verfahren gemäß Anspruch 10, **dadurch gekennzeichnet, dass** der anorganische Träger aus Metalloxid, Siliciumoxid, Glas, Metall oder Silicium besteht.

12. Verfahren gemäß Anspruch 10, **dadurch gekennzeichnet, dass** der organische Träger aus Kunststoff, Polyimid, Polycarbonat, Cycloolefinpolymer (COP) besteht.

13. Fester Träger, der durch das Verfahren gemäß einem der Ansprüche 8 bis 12 erhalten werden kann, **dadurch gekennzeichnet, dass** eine Verbindung gemäß einem der Ansprüche 1 bis 7 mittels der Gruppierung X der Verbindung an die Oberfläche des Trägers gebunden ist.

14. Verfahren zur Immobilisierung biologischer Moleküle auf einem festen Träger, **dadurch gekennzeichnet, dass** es umfasst:
a) eine Stufe der Durchführung des Verfahrens gemäß einem der Ansprüche 8 bis 12 und
b) eine Stufe des Inkontaktbringens des in Stufe a) erhaltenen Trägers mit einer Lösung, die das zu immobilisierende biologische Molekül (die zu immobilisierenden biologischen Moleküle) umfasst.

15. Verfahren zur Immobilisierung gemäß Anspruch 14, in dem das zu immobilisierende biologische Molekül aus Nucleinsäuren, Proteinen, Lipiden, Zuckern, Zellen, Bakterien ausgewählt wird.

16. Verfahren zum Versiegeln von zwei festen Trägern, **dadurch gekennzeichnet, dass** es umfasst:
a) eine Stufe des Inkontaktbringens eines festen Trägers, der an der Oberfläche Nitridfunktionen trägt, mit einer Verbindung gemäß einem der Ansprüche 1 bis 7 und
b) eine Stufe des Inkontaktbringens des in Stufe a) erhaltenen Trägers mit einem festen Träger, der an der Oberfläche Nitridfunktionen trägt, wenn der in Stufe a) erhaltene Träger Hydroxylfunktionen trägt, oder mit einem festen Träger, der Hydroxylfunktionen trägt, wenn der in Stufe a) verwendete Träger an der Oberfläche Nitridfunktionen trägt.

17. Verfahren gemäß Anspruch 16, **dadurch gekennzeichnet, dass** die festen Träger Träger aus einem Material sind, das aus Metalloxid, Siliciumoxid, Glas, einem Metall und Silicium ausgewählt ist.

18. Verfahren gemäß Anspruch 16 oder 17, **dadurch gekennzeichnet, dass** die festen Träger aus Silicium sind.

19. Struktur, die durch das Verfahren gemäß einem der Ansprüche 16 bis 18 erhalten werden kann, **dadurch gekennzeichnet, dass** sie aus zwei festen Trägern besteht, die untereinander durch eine Verbindung mit der folgenden Formel IV verbunden sind: 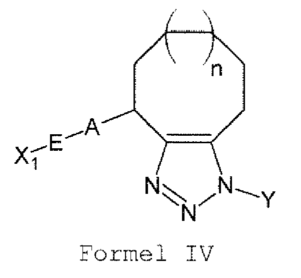
in der E, A und n wie in einem der Ansprüche 1 bis 7 definiert sind,
X₁ eine Silylgruppe ist, wie sie für X in einem der Ansprüche 1 bis 7 definiert ist, aber mit einer Hydroxylfunktion reagiert hat,
Y eine kovalente Bindung oder ein organischer Spacer ist und - das Cycloalken ein Heteroatom, vorzugsweise 0 oder S, umfassen kann.

## Claims

1. Silane compound **characterised in that** it has the following formula I:
X-E-A-Z Formula I
in which:
- X is a silylated group able to create a covalent bond after reaction with the hydroxyl functions of a substrate,
- E represents an organic spacer group,
- A represents a single bond or a group chosen from -CONH-, -NHCO-, -OCH₂CONH-, -NHCOCH₂O-, -O-, -S-, and
- Z represents a cycloalkyne or a heterocycloalkyne having at least 8 links with the following formula Z: 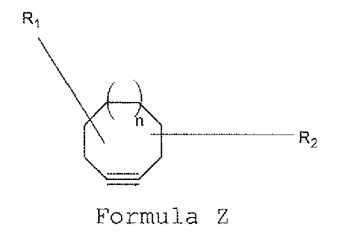 in which R₁ and R₂ represent independently of each other H, NO₂, Cl, Br, F, I, OR, SR, NR₂, R, NHCOR, CONHR, COOR with R representing an alkyl or aryl group, n ≥ 1 and, when Z is a hetercycloalkyne, the heteroatom is preferably O or S.

2. Compound according to claim 1, **characterised in that** in formula I, X is chosen from a trihalogenosilane group, a trihydrogenosilane group, a trialkoxysilane group -Si(OR₃)₃ with R₃ representing an alkyl group having 1 to 6 carbon atoms, linear or branched or a phenyl group; a triaminoalkylsilane group -Si(NR₄R₅)₃, with R₄ and R₅ representing, independently of each other, a saturated alkyl group having 1 to 6 carbon atoms, linear or branched or a phenyl group, or an organometallic group.

3. Compound according to claim 1 or 2, **characterised in that** in formula I, E represents a hydrocarbonated group, optionally including one or more unsaturations and/or one or more aromatic groups and/or one or more heteroatoms.

4. Compound according to claim 3, **characterised in that** the hydrocarbonated group includes from 2 to 24 carbon atoms.

5. Compound according to claim 4, **characterised in that** the hydrocarbonated group is an alkylene group including from 2 to 24 carbon atoms.

6. Compounds according to any one of the preceding claims, **characterised in that** they have the following formula II: 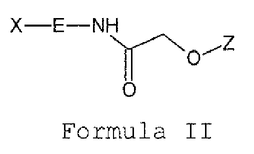 in which E represents an alkylene group including from 2 to 24 carbon atoms and X, Z, R₁ and R₂ are as defined in claim 1.

7. Silane compound according to any one of the preceding claims, **characterised in that** in formula I, X is a triethoxysilane group, E is a carbonated chain having 3 carbon atoms, Z is a cyclooctyne or a heterocyclooctyne the triple alkyne bond of which is in the alpha position, the heteroatom of the heterocyclooctyne preferably being O or S, and R₁ and R₂ are hydrogen atoms, the compound having the following formula III:

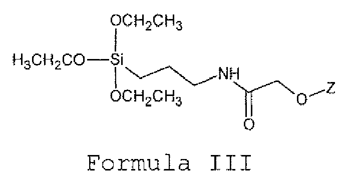

8. Method of functionalising a solid substrate including surface hydroxyl functions, **characterised in that** it includes a step of bringing into contact with said substrate a solution including at least one silane compound according to any one of claims 1 to 7.

9. Method according to claim 8, **characterised in that** it includes before the step of bringing into contact a step of treating the surface of the substrate in order to create on said surface the hydroxyl functions necessary for grafting.

10. Method according to claim 8 or 9, **characterised in that** the solid substrate is an organic substrate or an inorganic substrate.

11. Method according to claim 10, **characterised in that** the inorganic substrate is a metal oxide, silicon oxide, glass, metal or silicon.

12. Method according to claim 10, **characterised in that** the organic substrate is of plastic, polyimide, polycarbonate, cyclo olefin polymer (COP).

13. Solid substrate obtainable by the method according to any one of claims 8 to 12, **characterised in that** a compound according to any one of claims 1 to 7 is bonded to the surface of the substrate by means of the X group of said compound.

14. Method of immobilising biological molecules on a solid substrate **characterised in that** it includes:
a) a step of implementing the method according to any one of claims 8 to 12, and
b) a step of bringing the substrate obtained in step a) into contact with a solution including the biological molecule(s) to be immobilised.

15. Immobilisation method according to claim 14, wherein the biological molecule to be immobilised is chosen from nucleic acids, proteins, lipids, sugars, cells, bacteria.

16. Method of cementing two solid substrates **characterised in that** it includes:
a) a step of bringing a solid substrate including surface azide functions into contact with a compound according to any one of claims 1 to 7, and
b) a step of bringing the substrate obtained in step a) into contact with a solid substrate including surface azide functions if the solid substrate obtained in the step a) includes hydroxyl functions or with a solid substrate including hydroxyl functions if the substrate used in the step a) includes surface azide functions.

17. Method according to claim 16, **characterised in that** said solid substrates are substrates in a material chosen from a metal oxide, silicon oxide, glass, a metal or silicon.

18. Method according to claim 16 or 17, **characterised in that** the solid substrates are in silicon.

19. Structure obtainable by the method according to any one of claims 16 to 18, **characterised in that** it consists in two solid substrates cemented together by a compound having the following formula IV: 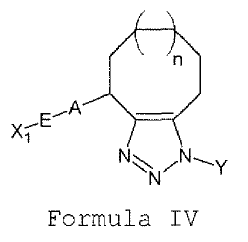
in which E, A and n are as defined in any one of claims 1 to 7,
X₁ is a silylated group as defined for X in any one of claims 1 to 7 but having reacted with a hydroxyl function,
Y is a covalent bond or an organic spacer, and
- the cycloalkyne may include a heteroatom, preferably O or S.
